# EUROPÄISCHE PATENTSCHRIFT

(11) **EP 3 099 467 B1**
(45) Veröffentlichungstag und Bekanntmachung des Hinweises auf die Patenterteilung: **29.07.2020**
(21) Anmeldenummer: 15700632.1
(22) Anmeldetag: 13.01.2015
(51) Int. Cl.: B29C 49/64, B29C 49/48, B29C 49/00, B29C 49/04, B29C 49/70

(54) **VORRICHTUNG ZUM HERSTELLEN VON BEHÄLTERERZEUGNISSEN AUS KUNSTSTOFFMATERIAL**
DEVICE FOR PRODUCING CONTAINER PRODUCTS FROM PLASTICS MATERIAL
DISPOSITIF DE FABRICATION DE PRODUITS DE TYPE RÉCIPIENT À PARTIR D'UN MATÉRIAU SYNTHÉTIQUE

(30) Priorität: 31.01.2014 DE 102014001446
(43) Veröffentlichungstag der Anmeldung: 07.12.2016
(73) Patentinhaber: Kocher-Plastik Maschinenbau GmbH, 74429 Sulzbach-Laufen (DE)
(72) Erfinder: SAUTER, Roland, 74429 Sulzbach-Laufen (DE); GESER, Johannes, 70839 Gerlingen (DE); SPALLEK,Michael, 55218 Ingelheim (DE)
(74) Vertreter: Bartels und Partner, Patentanwälte
(86) Internationale Anmeldenummer: PCT/EP2015/000039
(87) Internationale Veröffentlichungsnummer: WO 2015/113730

(56) Entgegenhaltungen:
- DE-A1- 3 141 069
- US-A- 5 356 052
- US-A1- 2010 262 114
- US-B2- 8 137 096

## Beschreibung

Die Erfindung betrifft eine Vorrichtung zum Herstellen mindestens eines Behältererzeugnisses aus Kunststoffmaterial, gemäß dem Oberbegriff von Anspruch 1. Ferner betrifft die Erfindung gemäß Patentanspruch 11 ein Verfahren zum Herstellen blasgeformter und befüllte Behältererzeugnisse aus Kunststoffmaterial.

DE 31 41 069A1 betrifft eine Vorrichtung für die Herstellung von Abbrechflaschen. Die Vorrichtung weist eine Vorwärmstation auf, in der ein Bereich zwischen einer oberen und unteren Randzone von zwei Folienbahnen auf die Plastifizierungstemperatur erwärmt wird. An die Vorwärmstation schließt sich eine Form- und Siegelstation mit Formrohren an. In der einen Endstellung der Form- und Siegelstation haben ihre Formhälften ihren maximalen Abstand voneinander. Beim Zufahren der beiden Formhälften werden die Folienbahnen unter Bildung eines Stranges miteinander versiegelt. Hierbei wird eine Gruppe von Abbrechflaschen mit Füllkanälen tiefgezogen. An die Form- und Siegelstation schließt sich eine Füllstation mit Füllrohren an. An die Füllstation schließt sich eine Heizstation an. An die Heizstation schließt sich eine Siegelstation für die Füllkanäle an. An diese Siegelstation für die Füllkanäle schließt sich eine Transporteinrichtung an, hinter der in Transportrichtung betrachtet eine Kühl- und Stanzstation angeordnet ist.

Weitere Verfahren und Vorrichtungen zum Herstellen von Behältererzeugnissen aus Kunststoff sind im Stand der Technik bekannt. Zum Herstellen des oder der jeweiligen Behältererzeugnisse wird beispielsweise ein Schlauch plastifizierten Kunststoffmaterials in eine Formeinrichtung hinein extrudiert, das eine Ende des Schlauches ist bereits oder wird durch Verschweißen verschlossen und der Schlauch wird durch Erzeugen eines an ihm wirkenden pneumatischen Druckgradienten aufgeweitet und zur Bildung des Behältnisses an die formgebenden Wände der Formeinrichtung, bestehend aus zwei gegenüberliegenden Einzel-Formteilen, angelegt. Bei der Durchführung des auf diesem technischen Gebiet bekannten bottelpack®-Verfahrens wird dann über einen entsprechenden Fülldorn der Fülleinrichtung das jeweilige Füllgut aseptisch in das einseitig verschlossene jeweilige Behältererzeugnis gefüllt und dieses nach Abziehen des Fülldorns anschließend hermetisch unter Bildung einer vorgebbaren Kopfgeometrie mittels einer Schließeinrichtung verschlossen, wobei für die Bildung des eigentlichen Kunststoffbehältnisses, in dem später das Fluid oder Füllgut bevorratet ist, zwei Einzel-Formteile in Form von Formgebungsbacken der Formeinrichtung beispielsweise mittels hydraulischer oder servoelektrischer Antriebsmittel für den Erhalt einer Schließstellung aufeinander zu und in eine ihrer Öffnungsstellungen voneinander weg gegenläufig bewegbar sind.

Um hier zu sehr hohen Ausstoßraten an Behältererzeugnissen zu gelangen, werden bei einem derartigen BFS(Blow-Fill-Seal)-Prozess, wie er beispielhaft in der US 8 137 096 B2 aufgezeigt ist, in der Formeinrichtung gleichzeitig mehrere nebeneinander liegende Behältnisse ausgeformt, um eine Behälterkette mit mehreren nebeneinander liegenden Behältnissen, beispielsweise acht oder zehn Behältnissen, auszubilden, wobei dieser Vorgang bei ungetakteten Maschinen weniger als 4 bis 5 Sekunden dauert.

Bei getakteten Maschinen, wie beispielhaft eine in der EP 1 626 903 B1 aufgezeigt ist, kann der Herstellvorgang deutlich länger, beispielsweise 10 bis 11 Sekunden dauern. Bei dieser bekannten Herstellmaschine sind in einer Art Karussellanordnung mehrere Stationen in Fertigungsrichtung hintereinander angeordnet, wobei in einer ersten Station der jeweilige Schlauch aus plastifiziertem Kunststoffmaterial in die Formvorrichtung einbringbar ist. In einer in Schwenkrichtung nachfolgenden zweiten Station ist dieser Schlauch zum Erstellen des Behälters blasformbar, wobei wiederum in eine in Schwenkrichtung nachfolgenden dritten Station der blasgeformte Behälter steril befüllt und mittels einer Schließeinrichtung kopfseitig verschließbar ist und in einer erneut in der genannten Schwenkrichtung nachfolgenden vierten Station findet der Entformvorgang des dann jeweils blasgeformten, befüllten und steril verschlossenen Behältererzeugnisses statt.

Diese an sich sehr vorteilhaften Herstellverfahren stellen allesamt mehr oder minder Hochtemperaturverfahren dar, da bei den mit Vorteil einzusetzenden Kunststoffmaterialien, wie einem Polypropylen-Material, die Homogenisierung der aufgeschmolzenen Polymermasse, die Verteilung im Schlauchkopf sowie das Ausformen und insbesondere das dichte Verschweißen des Behälters relativ hohe Temperaturen notwendig macht. Aufgrund des hohen Temperaturniveaus bei der Formgebungsphase sind die an sich vorteilhaften BFS-Verfahren für temperaturempfindliches Füllgut sehr wenig geeignet. Bei Behältnissen in Ampullenform kommen als Füllgut häufig Formulierungen biotechnologisch hergestellter Medikamente und Diagnostika in Betracht. Zur Gruppe derartiger Substanzen gehören therapeutische Enzyme, Gerinnungsfaktoren, zahlreiche Hormone wie Insulin, Epoetin oder Wachstumshormone, monoklonare Antikörper sowie biotechnologisch hergestellte Impfstoffe. Wegen der temperaturbedingten Probleme kommen in der Regel derartige Substanzen nicht in BFS-Behältnissen, sondern in konventionellen Glasfläschchen auf den Markt.

In der Fachwelt ist diese Problematik bekannt und ist Gegenstand aktueller wissenschaftlicher Diskussionen. Diesbezüglich ist auf eine Veröffentlichung von Wei Liu, Philippe Lam et al zu verweisen, die in Bio Pharm International July 2011, Seiten 22 bis 29, veröffentlicht ist. Die Autoren schlagen zur Verhinderung der Degradation des Füllgutes vor, deren pharmazeutische Formulierung sehr kalt zuzuführen. Bei für hohe Ausstoßraten schnell auszuführenden Prozessen ist dies nur schwierig umsetzbar, weil eine Temperaturerniedrigung zu einer Viskositätserhöhung des Füllgutes führt, was bei gleicher Füllzeit erhöhte Fülldrücke erfordern würde, die sich aber wegen der Scherempfindlichkeit der meisten Proteine wiederum nachteilig auf die Stabilität des Füllgutes auswirken können. Nachteilig an gekühlten Zuleitungen des Füllgutes mit Temperaturen von weniger als 15°C ist ferner, dass es zur Kondensation von Luftfeuchtigkeit in der BFS-Maschine und insbesondere am Füllrohr kommen kann. Dies hat zur Folge, dass Kondenswasser an der Behälteröffnung abgestreift wird, was wiederum zur Undichtigkeit beim Verschweißen des Behälters führt. Wenn, als entsprechend naheliegend, niedrige Formtemperaturen von weniger als 15°C eingestellt werden, kommt es ebenfalls zu Kondensationseffekten, was wiederum eine aufwendige und teure Trockenluftkonditionierung der Formoberflächen erfordern würde und zu Temperaturen von Kopfbereich und Kopfbacke der Form führen würde, die ein dichtes Verschweißen nicht mehr sicher gewährleisten würden. Eine Erniedrigung der Behälterwandstärke ist ebenfalls keine sinnvolle und effiziente Stellgröße zur Minimierung der verfügbaren, am Füllgut wirkenden Wärmemenge, da die Behälterwandstärken von vorgegebenen Parametern vorgeschrieben werden, beispielsweise dem zulässigen Permeationsverlust (Wasserverlust über die Lagerdauer durch Permeation) und den mechanischen Spezifikationen (mechanische Stabilität, Öffnungsverhalten, Deformierbarkeit zur Entleerung etc.).

Im Hinblick auf diese Problematik stellt sich die Erfindung die Aufgabe, eine Vorrichtung zur Verfügung zu stellen, die es ermöglicht, im BFS-Verfahren mit temperaturempfindlichem, biopharmazeutischem Füllgut befüllte Behältnisse bereit zu stellen, die einerseits gut ausgeformt und dicht sind und andererseits eine Stabilität des Füllgutes wie traditionelle Verpackungen aus Glas gewährleisten.

Erfindungsgemäß ist diese Aufgabe durch eine Vorrichtung gelöst, die die Merkmale des Patentanspruchs 1 in seiner Gesamtheit aufweist. Eine wesentliche Besonderheit der Erfindung besteht demgemäß darin, dass das jeweils fertigerstellte Behältererzeugnis mit seinem Füllgut außerhalb der Formeinrichtung einer Nachbehandlungszone zugeführt ist, in der auf das jeweilige Behältererzeugnis und/oder auf dem jeweiligen Behälterinhalt in Form des Füllgutes eine temperaturbeeinflussende Wirkung ausübbar ist, wobei die Formeinrichtung Einzel-Formteile aufweist, die paarweise aufeinander zu und/oder voneinander weg bewegt werden, um eine Herstellform zu schließen bzw. zu öffnen, in der das jeweilige Behältererzeugnis geformt und mit dem Behälterinhalt versehen sowie geschlossen wird.

Überraschenderweise hat es sich gezeigt, dass die Stabilität der verschiedenen, das Füllgut bildenden biopharmazeutischen Formulierungen von den Durchschnittstemperaturen während des BFS-Prozesses oder von Maximaltemperaturen eines Teils des Füllgutes während des Befüllens nur wenig abhängig ist, sondern, in weit größerem Maße von dem zeitlichen Verlauf der Temperatur an der Grenzfläche Füllgut/Behältererzeugnis nach dem Verschließen des Behältererzeugnisses abhängig ist, was mittels der erfindungsgemäß vorgesehenen Nachbehandlungszone in der gewünschten Weise beeinflussbar ist. Durch gesteuerte Temperaturbeeinflussung während einer Nachbehandlungsphase in der Nachbehandlungszone gelingt es, die Stabilität und insbesondere die biologische Aktivität des Füllgutes zu erhalten und gleichzeitig gut ausgeformte und dichte BFS-Behältnisse herzustellen.

Bei einer bevorzugten Ausführungsform der erfindungsgemäßen Vorrichtung lässt die vorgeschlagene Nachbehandlungszone eine konvektive Kühlung des Behältererzeugnisses, vorzugsweise von mindestens 20 Sekunden Dauer zu, bei der vorzugsweise die gleiche Orientierung für das Behältererzeugnis wie bei der Behälterbefüllung beibehalten ist. Es hat sich gezeigt, dass eine besonders hohe pharmazeutische Stabilität für das Füllgut (Behälterinhalt) erreichbar ist, wenn eine Kühlwirkung auf das jeweilige Behältererzeugnis ausgeübt wird, während dieses über die Dauer der Nachbehandlung in der Nachbehandlungszone zumindest näherungsweise die gleiche Orientierung besitzt, wie sie sich aus der Behälterbefüllung ergibt, was in der Praxis regelmäßig eine durchgehend vertikale Orientierung bedeutet. Ist die Nachbehandlungszone von ihrer Einwirkungsmöglichkeit auf das jeweilige Behältererzeugnis räumlich und/oder zeitlich lang genug ausgestaltet und wird die orientierungsstabile Bewegung wie erläutert gewährleistet, kann die angesprochene freie Konvektionskühlung für eine Zeitdauer von 20 bis 30 Sekunden schon ausreichend sein, um manche thermolabile Füllgüter sicher und frei von Beeinträchtigungen abfüllen zu können.

Der sich aus der gleichbleibenden Orientierung ergebende Vorteil beruht voraussichtlich auf dem Umstand, dass bei gleichbleibender Orientierung keine Grenzschichtverlagerung an der Grenzfläche Füllgut/Behälter stattfindet und dadurch ein günstiger zeitlicher Verlauf des Grenzflächen-Temperaturprofils gegeben ist.

Bei einer besonders bevorzugten Ausführungsform der erfindungsgemäßen Vorrichtung ist jedoch vorgesehen, dass in der Nachbehandlungszone als Nachbehandlungseinrichtung zumindest eine Temperiereinrichtung, insbesondere in Form einer Kühleinrichtung vorgesehen ist. Hierdurch ist mit einem gewissen apparatetechnischen Aufwand auf jeden Fall eine sichere Nachkühlung für die Behältererzeugnisse nach der Formerstellung erreicht.

Bei den für thermosensitives Füllgut in Betracht kommenden Behältererzeugnissen in Ampullenform mit Füllvolumina bis zu 10 ml ist für den jeweiligen Füllvorgang eine möglichst kurze Fülldauer vorgesehen, mit einer Verweilzeit des das Behältnis ausbildenden Polymers in der geschlossenen Herstellform von weniger als 7 Sekunden.

In besonders vorteilhafter Weise kann die Nachbehandlungseinrichtung eine Vorrichtung zum Erzeugen eines zumindest das jeweilige Behältererzeugnis beaufschlagenden Kühlluftstroms aufweisen. Hierbei kann zum Erzeugen von Flachluftströmen von gekühlter, ausgeblasener Pressluft eine Strömungsleiteinrichtung vorgesehen sein, die einen gerichteten Luftstrom aus komprimierter Kühlluft erzeugt. Diesbezüglich kann ein handelsübliches Gerät "LINEBLOW" vorgesehen sein, das von der Firma Karger GmbH, Paul-Ehrlich Str. 10a, D 63128 Dietzenbach, zusammen mit einem Kaltluftentwickler "COLDER" erhältlich ist. Damit lassen sich Flachluftströme beispielsweise mit bis zu 600 mm Basislänge bei Kaltlufttemperaturen von -25°C erzeugen, die die jeweiligen Behältererzeugnisse zur Nachbehandlung bestreichen.

Alternativ oder zusätzlich hierzu kann die Nachbehandlungseinrichtung eine Art Kühltunnel mit einem Durchgang für den Durchlauf der Behälterkette und mit den Durchgang zumindest teilweise begrenzenden Tunnelwänden aufweisen, die mittels eines die Wände durchströmenden Kühlmediums kühlbar sind.

Als weitere Möglichkeit oder zusätzlich zur Erzeugung eines Kühlluftstroms und/oder zum Kühltunnel kann die Nachbehandlungseinrichtung eine Tiefkühl oder Frostereinrichtung aufweisen, beispielsweise in Form eines fließenden Flüssigstickstoff-Bades, beispielsweise in Form eines "CRYOLINE®-Tauchbadfrosters, durch das die Behälterkette hindurchgeführt ist.

Alternativ oder zusätzlich zu den genannten temperaturbeeinflussenden Einrichtungen kann die Nachbehandlungseinrichtung eine einen Vorschub des jeweiligen Behältererzeugnisses, auch in Form einer Behälterkette bewirkende Fördereinrichtung mit an dem Behältererzeugnis oder an der Behälterkette angreifenden Förderelementen aufweisen, wobei die Förderelemente mittels eines sie durchströmenden Kühlmittelstroms kühlbar sind. Die Nachbehandlungseinrichtung bildet dergestalt sowohl eine Kühl- als auch eine Fördereinrichtung für das jeweilige Behältererzeugnis.

Gegenstand der Erfindung ist auch ein Verfahren zum Herstellen blasgeformter und befüllter Behältererzeugnisse aus Kunststoffmaterial, das die Merkmale des Patentanspruches 11 aufweist.

Weitere Ausgestaltungen des Verfahrens sind in den Unteransprüchen 12 bis 14 angegeben.

Nachstehend ist die Erfindung anhand von in der Zeichnung dargestellten Ausführungsbeispielen im Einzelnen erläutert.

Es zeigen:
- Fig. 1: eine stark vereinfacht gezeichnete Darstellung eines Ausführungsbeispiels der erfindungsgemäßen Vorrichtung;
- Fig. 2: eine in perspektivischer Schrägansicht und vergrößert gezeichneter Darstellung einzelne Blasleiste der Nachbehandlungseinrichtung des Ausführungsbeispiels von Fig. 1;
- Fig. 3: eine der Fig. 1 ähnliche Darstellung eines zweiten Ausführungsbeispiels der erfindungsgemäßen Vorrichtung ohne zugehörige Entformungseinrichtung und
- Fig. 4: eine in perspektivischer Schrägansicht gezeichnete Einzeldarstellung einer Nachbehandlungseinrichtung in Form einer kombinierten Kühl- und Fördervorrichtung für ein drittes Ausführungsbeispiel der erfindungsgemäßen Vorrichtung.

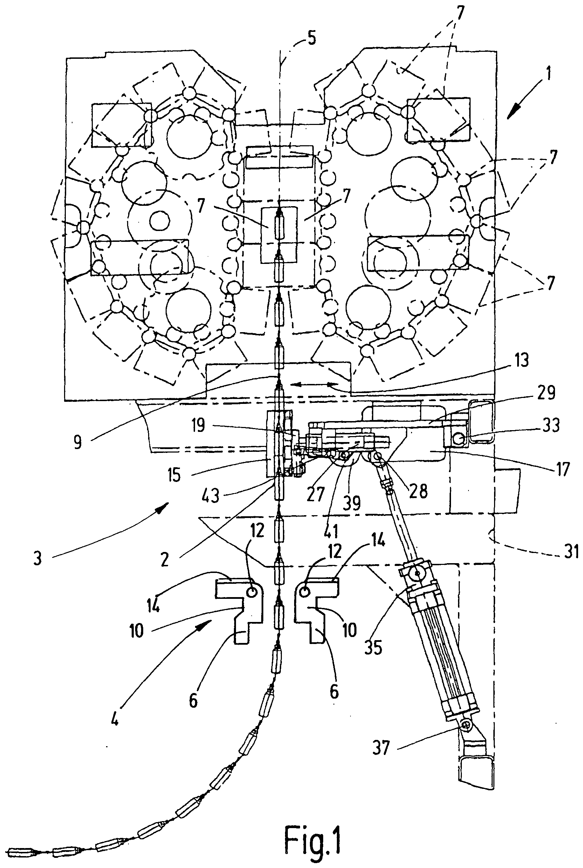

Die Fig. 1 zeigt ein Ausführungsbeispiel der erfindungsgemäßen Vorrichtung als Teil einer ungetakteten Rotationsformmaschine (nicht dargestellt), bei dem die eigentliche Formeinrichtung 1 mit einer Entformungseinrichtung 3 versehen ist, die den Entformvorgang der in der Formeinrichtung 1 ausgebildeten Behältnisse unterstützt. Bei der Formeinrichtung 1 handelt es sich um eine Einrichtung zum Durchführen eines Blasformverfahrens entsprechend dem bekannten bottelpack®-System, und zwar in einer Ausführungsform, bei der, wie im US-Patent 8,137,096 B2 gezeigt, entlang einer Herstellungslinie 5 verschiedene Formgebungsabschnitte an verschiedenen Stationen durchgeführt werden. In einer Art Karussell- oder Paternoster-Anordnung werden hierbei Einzel-Formteile 7, von denen in Fig. 1 lediglich einige beziffert sind, auf einer fiktiven Kreisbogenbahn paarweise aufeinander zu bewegt, um eine geschlossene Herstellform zu bilden, und zum Öffnen der Form wieder auseinanderbewegt. Da nach dem bottelpack®-Verfahren arbeitende Einrichtungen an sich bekannt sind, erübrigt sich eine nähere Erläuterung der Einzelheiten der Formeinrichtung 1 von Fig. 1.

Wie aus dieser Figur ersichtlich, tritt die gebildete Behälterkette 9 entlang der Herstellungslinie 5 an der mit 2 bezeichneten Austrittsstelle an der Entformungseinrichtung 3 als Behälterkette 9 aus. Wie bei derartigen Vorrichtungen üblich, hat die Behälterkette 9 eine breitflächige Gestalt, wobei eine Mehrzahl von Einzelbehältern, im vorliegenden Fall von ampullenartiger Gestalt, in der Behälterkette 9 Seite an Seite nebeneinander liegen. Beispielsweise kann die Behälterkette 9 acht nebeneinanderliegende Ampullen aufweisen. Um das Ablösen der Behältnisse von den Wänden der sich nach dem Formgebungsvorgang voneinander weg bewegenden Einzel-Formteile 7 zu unterstützen, vermittelt die Entformungseinrichtung 3 der Behälterkette 9 eine Auslenkbewegung, wie in Fig. 1 mit Doppelpfeil 13 angedeutet. Zu diesem Zweck weist die Entformungseinrichtung 3 eine Mitnehmeranordnung 15 auf, die in betrieblicher Verbindung mit einem elektrischen Antriebsmotor 17 die Auslenkbewegung der Behälterkette 9 erzeugt, um die Behältnisse von den Formwandteilen sicher abzulösen.

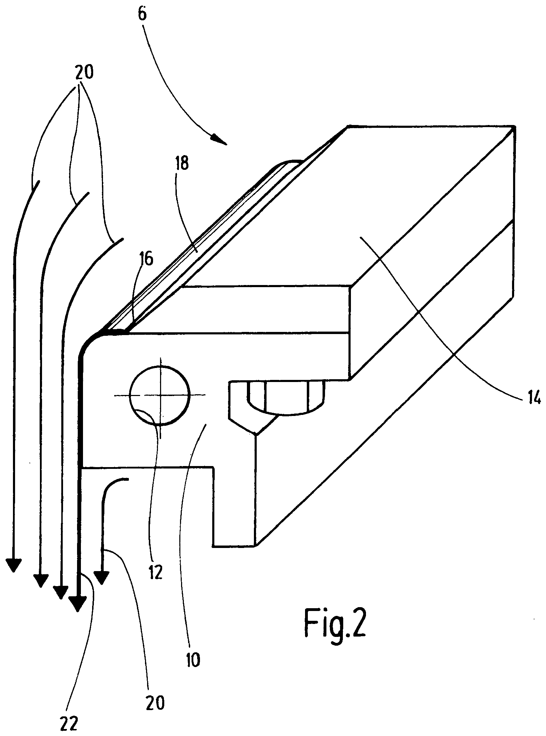

Die Mitnehmeranordnung 15 bildet mit einem Rahmenteil 19 feste Wandteile eines Durchgangskanals für die Behälterkette 9, der an der Austrittsstelle 2 endet. Der Rahmenteil 19 der Mitnehmeranordnung 15 ist für die entsprechend dem Doppelpfeil 13 verlaufenden Auslenkbewegungen an Führungsbahnen 27 geführt, die, wie auch der Motor 17, an einem Geräteteil 29 gelagert sind. Dieser ist wiederum an einem Vorrichtungsgestell 31 der Entformungseinrichtung 3 um eine Schwenkachse 33 schwenkbar gelagert. In einem Abstand von dieser Schwenklagerung ist bei 28 am Trägerteil 29 ein Linearantrieb 35 in Form eines hydraulischen oder pneumatischen Arbeitszylinders angelenkt, der wiederum an einer Anlenkstelle 37 am Vorrichtungsgestell 31 in einem Abstand vom Schwenklager 33 abgestützt ist. Dank der schwenkbaren Lagerung des Trägerteils 29 der Entformungseinrichtung 3 am Vorrichtungsgestell 31 kann die Entformungseinrichtung 3 für Einstell- und Wartungsmaßnahmen sowie als Vorbereitung zur Inbetriebnahme aus der in Fig. 1 dargestellten Arbeitsposition durch Zurückziehen des Linearantriebes 35 in eine Ruheposition geklappt werden, in der sich die Mitnehmeranordnung 15 außerhalb des Bereichs der Herstelllinie 5 befindet. Für die Bewegung der Mitnehmeranordnung 15 weist der Motor 17 ein Ausgangsgetriebe 39 mit einer die Drehbewegung in eine hin- und hergehende Bewegung umsetzenden Exzentereinrichtung 41 auf, die über einstellbare Schubstangen 43 mit dem Rahmenteil 19 gekoppelt ist. Über diese Getriebeanordnung ist dem Rahmenteil 19 und damit der zwischen der Mitnehmeranordnung 15 befindlichen Behälterkette 9 eine hin- und hergehende Rüttelbewegung vermittelbar, durch die vor der Austrittsstelle 23 ein sicheres Ablösen der geformten Behältnisse von den Formwänden sichergestellt ist, selbst wenn schwer entformbare Werkstoffe, insbesondere Polypropylen-Werkstoffe, benutzt werden, bei denen hohe Verarbeitungstemperaturen vorliegen.
Um durch hohe Verarbeitungstemperaturen bedingte Schädigungen von temperatursensitivem Füllgut zu vermeiden, weist die erfindungsgemäße Vorrichtung eine als Ganzes mit 4 bezeichnete Nachbehandlungseinrichtung auf. Diese ist an der Herstellungslinie 5 an der Behälterkette 9 nach deren Austrag an der Austrittsstelle 2 der Entformungseinrichtung 3 angeordnet. Bei dem Ausführungsbeispiel von Fig. 1 weist die Nachbehandlungseinrichtung 4 eine Einrichtung zur Nachkühlung der ausgetretenen Behälterkette 9 mittels Flachluftströmen aus gekühlter, ausgeblasener Pressluft auf. Zur Erzeugung kalter Flachluftströme, die die Behälterkette 9 an beiden Flachseiten bestreichen, sind beim Beispiel von Fig. 1 zwei Blasleisten 6 vorgesehen, die einander gegenüberliegend an der einen und der anderen Breitseite neben der Behälterkette 9 angeordnet sind und von denen eine in Fig. 2 gesondert dargestellt ist. Bei den Blasleisten 6 handelt es sich um an sich übliche Geräte vom Typ "LINEBLOW" in Form von Leistenkörpern mit einer Basislänge, die der Breite der Behälterkette 9 angepasst ist. Wie die Fig. 2 am deutlichsten zeigt, weist jede Blasleiste 6 einen Grundkörper 10 mit einem stirnseitigen Pressluftanschluss 12 auf, der an der ebenflächigen Oberseite des Grundkörpers 10 ausmündet. Mit der ebenen Oberseite des Grundkörpers 10 ist eine Deckplatte 14 verschraubt, die, spitz zulaufend, in einem kurzen Abstand vor dem in Fig. 2 linksseitig gelegenen Rand des Grundkörpers 10 endet. Zwischen dem spitzen Ende der Deckplatte 14 und dem Grundkörper 10 ist ein feiner Luft-Austrittsspalt 16 für die über den Anschluss 12 zugeführte Kaltluft gebildet, wobei der Austrittsspalt 16 eine Breite von 50 *µ*m besitzt. An den Spalt 16 schließt sich an der Oberseite eine bis zum Seitenrand verlaufende Wölbung 18 an. Bei dieser Konfiguration erzeugt die Blasleiste 6 durch den Coanda-Effekt aus der am Spalt 16 ausgeblasenen Pressluft einen geschichteten Luftfluss 22 entlang der glatten Kurve an der Wölbung 18 und zieht Umgebungsluft 20 mit, so dass ein Luftvorhang produziert wird, in dem ca. 25 bis 30 Mal so viel Luft gefördert wird als Pressluftvolumen über den Anschluss 12 zugeführt wird. Für den Betrieb kann über den Anschluss 12 Pressluft mit einer Temperatur von -25°C zugeführt werden, erzeugt beispielsweise mittels eines Kaltluftentwicklers vom Typ "COLDER".

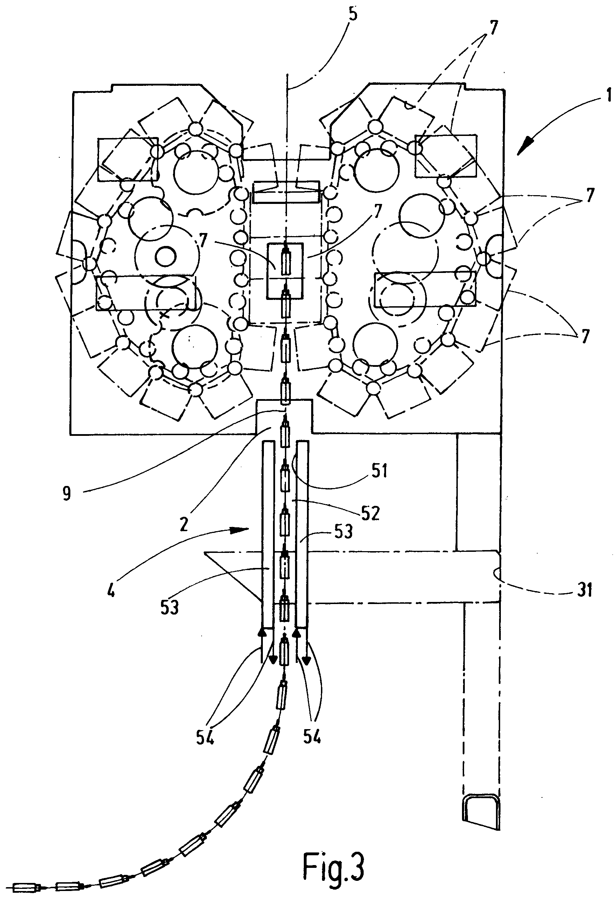

Die Fig. 3 zeigt ein weiteres Ausführungsbeispiel der erfindungsgemäßen Vorrichtung als Teil einer ungetakteten Rotationsformmaschine (nicht dargestellt), bei der eine Formeinrichtung 1 ohne zugehörige Entformungseinrichtung vorgesehen ist. Wiederum ist, wie beim Beispiel von Fig. 1, nach der Austrittsstelle 2, an der die Behälterkette 9 die Formeinrichtung 1 verlässt, eine Nachbehandlungseinrichtung 4 vorgesehen. Bei diesem Ausführungsbeispiel weist die Nachbehandlungseinrichtung 4 einen Kühltunnel 51 auf, der sich unmittelbar an die Austrittsstelle 2 der Formeinrichtung 1 anschließt und für den Durchlauf der Behälterkette 9 einen Durchgang 52 bildet. Dieser ist beidseits der Behälterkette 9 durch Tunnelwände begrenzt, die durch die Innenfläche von je einer Kühlplatte 53 gebildet sind, die, einander gegenüberliegend, auf der einen und der anderen Seite der Behälterkette 9 in Längsrichtung der Herstelllinie 5 verlaufen. Die Kühlplatten 53 erstrecken sich über einen Längenabschnitt der Behälterkette 9, der der Länge mehrerer Ampullen entspricht und so lang gewählt ist, dass sich eine Verweilzeit oder Kühlzeit für eine Nachkühlung von ca. 40 bis 60 Sekunden Dauer ergibt. Die Kühlplatten 53, die sich über die gesamte Breite der mehrreihigen Behälterkette 9 erstrecken, weisen innere Fluidführungen für ein Kühlfluid auf, das in den Kühlplatten 53 über Anschlüsse 54 zirkuliert, die mit einem Kühlkreislauf in Verbindung sind. Je nach gewünschter Kühlleistung kommen unterschiedliche Kühlmittel in Betracht, wie Wasser-Glykol-Kühlflüssigkeiten, Kaltluft, flüssiger oder gasförmiger Stickstoff oder komprimiertes Kältemittel, wobei die Kühlplatten 53 Verdampfer bilden können.

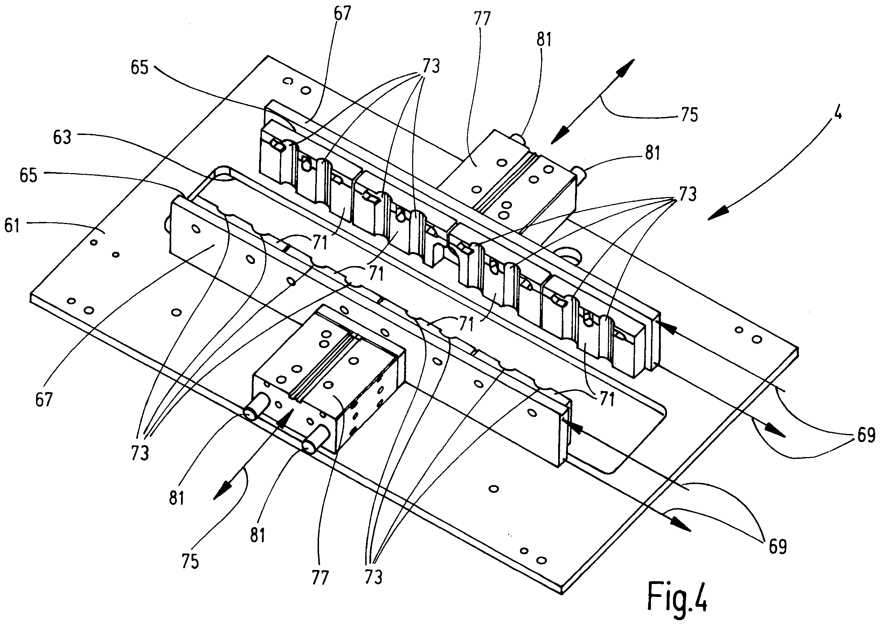

Die Fig. 4 zeigt für ein weiteres Ausführungsbeispiel der erfindungsgemäßen Vorrichtung einer Nachbehandlungseinrichtung 4 in Form einer kombinierten Förder- und Kühleinrichtung, wie sie ohne Weiteres auch bei getakteten Formmaschinen zum Einsatz kommen könnte. Diese weist eine Grundplatte 61 rechteckförmigen Umrisses auf, die einen zentral gelegenen, sich parallel zu den Langseiten der Rechteckform erstreckenden Durchgang 63 für die Behälterkette 9 aufweist, die in der Fig. 4, die die Nachbehandlungseinrichtung 4 in Einzeldarstellung zeigt, nicht dargestellt ist. Als Kühl- und Förderelemente sind Leisten 65 vorgesehen, die gleich ausgebildet sind und von denen sich jede entlang einer Langseite des Durchgangs 63 zu beiden Seiten der dazwischenliegenden Behälterkette 9 erstreckt. Jede Leiste 65 besteht aus einer außenliegenden Kühlplatte 67, die ebenfalls gleich ausgebildet sind und jeweils in ihrem Aufbau den Kühlplatten 53 des Kühltunnels 51 von Fig. 3 entsprechen. Wie bei diesen Kühlplatten 53 weisen auch die Kühlplatten 67 stirnseitige Anschlüsse 69 für die Verbindung mit einem Kühlkreislauf auf. In entsprechender Weise sind die Kühlplatten 67 von einem Kühlmedium durchströmbar, wiederum in Entsprechung zu dem Kühltunnel 51 von Fig. 3. An den Innenseiten der Kühlplatten 67 sind als eigentliche Förderelemente Mitnehmerkörper 71 angebracht, in denen vertiefte Ampullenaufnahmen 73 ausgebildet sind. Die Leisten 65, die in Fig. 4 in auseinandergefahrener Position gezeigt sind, sind auf der Grundplatte 61 zueinander hin und auseinander beweglich geführt, wie mit Doppelpfeilen 65 angedeutet ist. Für diese Bewegungen ist jede Leiste 65 mit einem Linearantrieb 77 verbunden, der Anschlüsse 81 für eine Betätigung mittels eines Druckmittels aufweist. Jedoch könnten auch elektromechanisch betätigbare Linearantriebe 77 vorgesehen sein. Für die kombinierte Förder- und Kühlfunktion werden die Leisten 65 mit den Kühlplatten 67 und den Ampullenaufnahmen 73 gegeneinander bewegt, so dass die Behältnisse in den Ampullenaufnahmen 73 aufgenommen sind und ein Kühlvorgang stattfindet. Sodann wird die Grundplatte 61 bei zusammengefahrenen Leisten 65 mittels eines nicht dargestellten Hubantriebs, der wiederum druckmittelbetätigt oder elektromechanisch betätigt sein kann, in der Förderrichtung der Behälterkette 9 entlang der Herstelllinie 5 über einen Zeitraum bewegt, der der gewünschten Nachkühlzeit entspricht. Die Leisten 65 werden dann auseinanderbewegt, und die Grundplatte 61 mit den Leisten 65 wird dann nach oben in die Ausgangsposition für einen nachfolgenden Kühl- und Förderschritt bewegt, für den die Leisten 65 wieder zueinander bewegt werden.

Wie ersichtlich, erfolgt bei den aufgezeigten Nachbehandlungseinrichtungen 4 die Nachbehandlung jeweils bevorzugt bei in unveränderter Position befindlichen Behältnissen, d.h. in der Füllposition mit obenliegendem Kopfbereich der Behältnisse. Während der Nachbehandlung verbleibt somit der Grenzschichtaufbau Füllgut/Behälterwand ungestört. Wie bereits oben angedeutet, können die aufgezeigten Arten der Nachbehandlungseinrichtungen 4 einzeln vorgesehen sein oder in Kombination miteinander in beliebiger Reihenfolge eingesetzt sein. Vorzugsweise ist eine Nachbehandlungseinrichtung 4 unmittelbar nach der Austrittsstelle 2 der Formeinrichtung 1 angeordnet.

In nachstehend angegebenen Beispielen sind durch die erfindungsgemäße Nachbehandlung erzielbare Ergebnisse angegeben.

Bei den Beispielen kommt eine BFS-Anlage zum Einsatz, sowie eine sich unmittelbar nach Austrag aus der BFS-Maschine anschließende Nachkühlung/Nachkonditionierung, die die Orientierung der Behälter, wie sie bei der Befüllung besteht (z.B. Behälterkopf nach oben) im Wesentlichen aufrechterhält. Die Nachkühlung dauerte ca. 10-60 sec und wurde mit Flachluftströmen von gekühlter ausgeblasener Pressluft realisiert. Es wurde ein handelsübliches Gerät "LINEBLOW" (mit 60 mm Blaslänge) der Firma Kagen GmbH, Paul-Ehrlich Str. 10a, D 63128 Dietzenbach, zusammen mit einem bzw. zwei "COLDER" Kaltluftentwicklern (Kaltlufttemperatur-25°C) eingesetzt. Vergleichbare Ergebnisse wurden mit einem Kühltunnel erreicht, bei dem die Behälter in einem von der Kühlleistung gleichwertigen Kaltluftstrom zwischen zwei gekühlten Platten transportiert werden.

### Beispiele mit bekannt temperaturempfindlichen, flüssigen Arzneistoffen:

### Formulierungen:

### -a- Adalimumab

Maschine bottelpack type 460 (ungetaktet) der Fa. Rommelag
Material: Low Density Polyethylen, LDPE Lyondell Basell 3020 D LDPE
Füllvolumen 0,8 ml; 1,5 ml BFS-Ampulle
Parameter:

| | |
|---|---|
| Polymertemperatur bei Schlauchaustritt °C | 180 |
| Fülltemperatur Füllgut °C | 15 |
| Füllzeit sec | 1 |
| Zeit Schlauch frei bis Schlauch in Form sec | 5,5 |
| Zeit Schlauch in der Form sec | 5,5 |
| Formtemperatur °C | 20 |
| Zeit zwischen Formung & Füllung sec | 0,6 |
| Zeit Austrag aus BFS bis Nachkonditionierung sec | 30 |
| Nachkonditionierung Art | Flachstrompressluft, |
| | orientierungsstabil, |
| Nachkonditionierung Dauer sec | 30 |
| Kaltluftvolumenstrom Liter pro min | 150 |

Formulierung: Adalimumab (Humira®) 40 *µ*g in Phosphat-/Citrat gepufferter, wässriger Lösung, enthaltend folgende Stabilisatoren: Mannitol, NaCl und Polysorbat 80.

Nach Abfüllung und nach 1 bis 3 sowie 12 Monaten Lagerung bei 2°C bis 8°C ergab sich kein signifikanter Unterschied in der biologischen Aktivität/Stabilität (Agglomerate, pH-Wert, Verfärbungen, Niederschläge, etc.) gegenüber einer handelsüblichen Verpackungskonfiguration in Glasfläschchen.

Werden die Behälter vor oder in der Nachbehandlungszone nicht orientierungsstabil bewegt, also der Behälter gedreht, gewendet oder gekippt, ist die biologische Aktivität schon nach 30 Tagen gegenüber dem orientierungsstabilen Transport deutlich verringert, während analoge Bewegungen in der Glasfläschchenverpackung oder in erfindungsgemäßer orientierungsstabil hergestellten Behältern keine signifikanten Aktivitätsveränderungen zeigten.

### -b- Epoetin alfa

Maschine bottelpack type 460 (ungetaktet) der Fa. Rommelag
Material: LDPE Lyondell Basell 1840 H
Füllvolumen 1 ml in 2 ml BFS-Ampulle
Parameter:

| | |
|---|---|
| Polymertemperatur bei Schlauchaustritt °C | 170 |
| Fülltemperatur Füllgut °C | 17 |
| Füllzeit sec | 1,2 |
| Zeit Schlauch frei bis Schlauch in Form sec | 6 |
| Zeit Schlauch in der Form sec | 6 |
| Formtemperatur °C | 17 |
| Zeit zwischen Formung & Füllung sec | 0,6 |
| Zeit Austrag aus BFS bis Nachkonditionierung sec | 25 |
| Nachkonditionierung Art | Flachstrompressluft |
| Nachkonditionierung Dauer sec | 50 |
| Kaltluftvolumenstrom Liter pro min | 200 |

Formulierung: Epoetin alfa: 10,000 IU/ml in Phosphat gepufferter, wässriger Lösung, enthaltend folgende Stabilisatoren: Aminoessigsäure, NaCl und
Polysorbat 80.

Nach Abfüllung und nach 1 bis 3 sowie 12 Monaten Lagerung bei 2°C bis 8°C ergab sich kein signifikanter Unterschied in der biologischen Aktivität/Stabilität gegenüber einer Verpackungskonfiguration in Glasfläschchen.

### -c- interferon beta-1a

Maschine bottelpack type 321 (getaktet) der Fa. Rommelag
Material: LDPE Lyondell Basell 1840 H
Füllvolumen 0,5 ml in 1 ml BFS-Ampulle
Parameter:

| | |
|---|---|
| Polymertemperatur bei Schlauchaustritt °C | 172 |
| Fülltemperatur Füllgut °C | 20 |
| Füllzeit sec | 1 |
| Zeit Schlauch frei bis Schlauch in Form sec | 5,5 |
| Zeit Schlauch in der Form sec | 5,5 |
| Formtemperatur °C | 20 |
| Zeit zwischen Formung & Füllung sec | 0,5 |
| Zeit Austrag aus BFS bis Nachkonditionierung sec | 30 |
| Nachkonditionierung Art | Flachstrompressluft |
| Nachkonditionierung Dauer sec | 30 |
| Kaltluftvolumenstrom Liter pro min | 40 |

Formulierung: 33 *µ*g/ml Interferon beta-1a in Acetat gepufferter, wässriger Lösung (pH 4), enthaltend folgende weitere Bestandteile: Poloxamer 188, L-Methionin, Benzylalkohol.

Nach Abfüllung und nach 1 bis 3 sowie 12 Monaten Lagerung bei 2°C bis 8°C ergab sich kein signifikanter Unterschied in der biologischen Aktivität/Stabilität gegenüber einer Verpackungskonfiguration in Fertigspritzen.

Werden die Behälter vor oder in der Nachbehandlungszone nicht orientierungsstabil bewegt, war die biologische Aktivität gegenüber dem orientierungsstabilen Transport signifikant verringert. Analoge Bewegungen der orientierungsstabil hergestellten Behälter nach Abschluss der Nachkonditionierung zeigten keine signifikanten Veränderungen der Produktstabilität.

### -d- Trastuzumab

Maschine bottelpack type 321 (getaktet) der Fa. Rommelag
Material: LDPE Lyondell Basell 3020 D
Füllvolumen 7 ml in 10 ml BFS-Ampulle
Parameter:

| | |
|---|---|
| Polymertemperatur bei Schlauchaustritt °C | 180 |
| Fülltemperatur Füllgut °C | 15 |
| Füllzeit sec | 1,2 |
| Zeit Schlauch frei bis Schlauch in Form sec | 6 |
| Zeit Schlauch in der Form sec | 6 |
| Formtemperatur °C | 20 |
| Zeit zwischen Formung & Füllung sec | 0,6 |
| Zeit Austrag aus BFS bis Nachkonditionierung sec | 15 |
| Nachkonditionierung Art | Flachstrompressluft |
| Nachkonditionierung Dauer sec | 50 |
| Kaltluftvolumenstrom Liter pro min | 400 |

Formulierung: 21 *µ*g/ml Trastuzumab in wässriger Lösung (pH 6), enthaltend folgende weitere Bestandteile: L-Histidinhydrochlorid, L-Histidin α, α-Trehalosedihydrat, Polysorbat 20.

Nach Abfüllung und nach 1 bis 3 sowie 12 Monaten Lagerung bei 2°C bis 8°C ergab sich kein signifikanter Unterschied in der biologischen Aktivität/Stabilität gegenüber einer Verpackungskonfiguration in Glasampullen.

### -e- Filgrastim

Maschine bottelpack type 321 (getaktet) der Fa. Rommelag
Material: Borealis LE 6601-PH Polyolefin
Füllvolumen 1,6 ml in 2,5 ml BFS-Ampulle
Parameter:

| | |
|---|---|
| Polymertemperatur bei Schlauchaustritt °C | 170 |
| Fülltemperatur Füllgut °C | 20 |
| Füllzeit sec | 1 |
| Zeit Schlauch frei bis Schlauch in Form sec | 4,5 |
| Zeit Schlauch in der Form sec | 4,5 |
| Formtemperatur | 15 |
| Zeit zwischen Formung & Füllung sec | 0,6 |
| Zeit Austrag aus BFS bis Nachkonditionierung sec | 20 |
| Nachkonditionierung Art | Flachstrompressluft |
| Nachkonditionierung Dauer sec | 60 |
| Kaltluftvolumenstrom Liter pro min | 100 |

Formulierung: 480 *µ*g Filgrastim wässrige Lösung, enthaltend folgende weitere Bestandteile: Natriumacetat, Sorbitol und Polysorbat 80 (Tween 80).

Nach Abfüllung und nach 1 bis 3 sowie 12 Monaten Lagerung bei 2°C bis 8°C ergab sich kein signifikanter Unterschied in der biologischen Aktivität/Stabilität gegenüber einer Verpackungskonfiguration in Glasfertigspritzen.

### -f- Rotavirus Impfstoff

Maschine bottelpack type 312 (getaktet) der Fa. Rommelag
Material: Polypropylen, PP Lyondell Basell Purell SM170G
Füllvolumen 1 ml in 2,5 ml BFS-Trink-Ampulle
Parameter:

| | |
|---|---|
| Polymertemperatur bei Schlauchaustritt °C | 192 |
| Fülltemperatur Füllgut °C | 18 |
| Füllzeit sec | 1,1 |
| Zeit Schlauch frei bis Schlau in Form sec | 6,5 |
| Zeit Schlauch in der Form sec | 6,5 |
| Formtemperatur °C | 18 |
| Zeit zwischen Formung & Füllung sec | 0,5 |
| Zeit Austrag aus BFS bis Nachkonditionierung sec | 35 |
| Nachkonditionierung Art | Flachstrompressluft |
| Nachkonditionierung Dauer sec | 65 |
| Kaltluftvolumenstrom Liter pro min | 150 |

Formulierung: Humanes Rotavirus (lebend, attenuiert) mindestens 106,0 ZKID50 in wässriger Lösung u.a. mit den weiteren Hilfsstoffen, Zusätzen: Saccharose, Dextran, Sorbitol, Calciumcarbonat sowie Xanthan-Gummi.

Nach Abfüllung und nach 1 bis 3 sowie 12 Monaten Lagerung bei 2°C bis 8°C ergab sich kein signifikanter Unterschied in der biologischen Aktivität/Stabilität gegenüber einer Verpackungskonfiguration in einer Tube aus Polyethylen.

### -g- Octreotide acetate

Maschine bottelpack type 312 (getaktet) der Fa. Rommelag
Material: Polypropylen, PP, Lyondell Basell Purell SM170G
Füllvolumen 5 ml in 7,5 ml BFS-Ampulle
Parameter:

| | |
|---|---|
| Polymertemperatur bei Schlauchaustritt °C | 175 |
| Fülltemperatur Füllgut °C | 15 |
| Füllzeit sec | 1,2 |
| Zeit Schlauch frei bis Schlauch in Form sec | 6 |
| Zeit Schlauch in der Form sec | 6 |
| Formtemperatur | 20 |
| Zeit zwischen Formung & Füllung sec | 0,6 |
| Zeit Austrag aus BFS bis Nachkonditionierung sec | 25 |
| Nachkonditionierung Art | Flachstrompressluft |
| Nachkonditionierung Dauer sec | 50 |
| Kaltluftvolumenstrom Liter pro min | 300 |

Formulierung: 4,4 mg/ml Octreotide Acetat in wässriger Lösung u.a. mit den weiteren Hilfsstoffen, Zusätzen: Mannitol, Na Carboxymethylcellulose.

Nach Abfüllung und nach 1 bis 3 sowie 12 Monaten Lagerung bei 2°C bis 8°C ergab sich kein signifikanter Unterschied in der biologischen Aktivität/Stabilität gegenüber einer Verpackungskonfiguration in einer Tube aus Polyethylen.

Bei einer bevorzugten, nicht näher dargestellten Ausführungsform der erfindungsgemäßen Vorrichtung kann auf eine Nachbehandlungseinrichtung, wie eine Kühleinrichtung, bei manchen Füllgütern, die nicht allzu thermolabil sind, auch völlig verzichtet werden. So kann es genügen, nach der Austrittsstelle des jeweiligen Behältererzeugnisses eine Nachbehandlungszone vorzusehen, die eine konvektive Kühlung der Behälter von mindestens 20 Sekunden, vorzugsweise von 20 bis 30 Sekunden Dauer zulässt, wobei sich ferner als vorteilhaft herausgestellt hat, wie bereits erläutert, dass das jeweilige Behältererzeugnis in der Nachbehandlungszone eine Orientierung aufweist, die näherungsweise gleich ist der Orientierung des Behältererzeugnisses bei der Behälterbefüllung.

Anstelle einzelner Behältererzeugnisse, die über einen Kartenverbund (nicht dargestellt) auch in Nebeneinanderanordnung miteinander verbunden sein können, ist die Ausgestaltung des Behälterverbundes auch mittels der Behälterkette 9 in Übereinanderanordnung wie vorstehend beschrieben möglich. Die angesprochene Nachbehandlungszone sowie etwaige Nachbehandlungseinrichtungen können aber auch in Vorrichtungen Anwendung finden, bei denen nur einzelne Behältererzeugnisse geformt, befüllt und verschlossen und dem Ausgang einer Formvorrichtung zugeführt werden. Unabhängig davon sollte jedenfalls eine Temperaturbehandlung, insbesondere in Form der Kühlung erst dann am Behältererzeugnis einwirken, wenn dieser verschlossen ist; eine vorangehende Kühlung könnte ansonsten den kopfseitigen Schließprozess des Behältererzeugnisses nachteilig beeinflussen, da für den dahingehenden Formgebungsvorgang entsprechend ausreichend hohe Formtemperaturen im Kunststoffmaterial zur Verfügung stehen müssen.

Die Nachbehandlungszone, die auf eine konvektive Umgebungskühlung der Behälter abzielt, ist in den Figuren nicht unmittelbar dargestellt. Würde man die beispielsweise in der Fig. 3 dargestellte Kühleinrichtung 53 völlig entfallen lassen, könnte ohne weitere Behinderung die konvektive Luftströmung direkt an die Behälter der Behälterlinie 9 gelangen, sobald diese die Formeinrichtung 1 verlassen. Um eine hinreichende Kühlwirkung erzielen zu können, ist es dann weiter vorteilhaft, die Länge der konvektiven Nachbehandlungszone mindestens um das Vierfache, vorzugsweise jedoch um das Fünffache der vorgegebenen Länge innerhalb der Form-Herstellstrecke zu erhöhen. Die Form-Herstellstrecke ist dabei im Wesentlichen durch die Länge der Formeinrichtung 1 vorgegeben, die nach Schließen der oberen Paare an Formhälften 7 für die Behältererstellung benötigt wird, bis am unteren Ende der Formeinrichtung 1 sich die zugehörigen Formpaare 7 wieder voneinander entfernen und die Behältererzeugnisse der Behälterkette 9 freigeben. Die dahingehende Form-Herstellstrecke ist dann ausgehend von der Freigabe des Behältererzeugnisses am unteren Ende der Formeinrichtung 1 um den Faktor 4 bis 5 oder mehr zu verlängern, und zwar gemäß der Darstellung nach der Fig. 3 bevorzugt in vertikaler Richtung, um die relative Lage zwischen Behälterwand und dem aufgenommenen Behälterinhalt nicht zu verändern. Nach Durchqueren der derart verlängerten Nachbehandlungszone (nicht dargestellt), vorzugsweise um den Faktor 4 bis 5 der Herstellstrecke ist die Abkühlung dann insoweit erfolgt, dass die in Fig. 3 beispielhaft dargestellte Umlenkung der Behälterkette 9 nach links zur Weiterverarbeitung ohne Weiteres vorgenommen werden kann.

## Patentansprüche

1. Vorrichtung zum Herstellen mindestens eines Behältererzeugnisses aus Kunststoffmaterial, das mittels einer Formeinrichtung (1) geformt, mittels einer Fülleinrichtung mit einem vorgebbaren Behälterinhalt versehen und mittels einer Schließeinrichtung geschlossen wird, wobei die Formeinrichtung (1) Einzel-Formteile (7) aufweist, die paarweise aufeinander zu und voneinander weg bewegt werden um eine Herstellform zu schließen bzw. zu öffnen, in der das jeweilige Behältererzeugnis geformt und mit dem Behälterinhalt versehen sowie geschlossen wird, **dadurch gekennzeichnet, dass** das jeweilige, fertig hergestellte Behältererzeugnis einer Nachbehandlungszone zugeführt ist, in der auf das jeweilige Behältererzeugnis und/oder auf den jeweiligen Behälterinhalt eine temperaturbeeinflussende Wirkung ausgeübt ist.

2. Vorrichtung nach Anspruch 1, **dadurch gekennzeichnet, dass** die Nachbehandlungszone eine konvektive Kühlung des Behältererzeugnisses von vorzugsweise mindestens 20 sec. Dauer zulässt, bei der zumindest näherungsweise die gleiche Orientierung für das Behältererzeugnis wie bei der Behälterbefüllung beibehalten ist.

3. Vorrichtung nach Anspruch 1 oder 2, **dadurch gekennzeichnet, dass** in der Nachbehandlungszone als Nachbehandlungseinrichtung (4) zumindest eine Temperiereinrichtung, insbesondere in Form einer Kühleinrichtung, vorgesehen ist.

4. Vorrichtung nach Anspruch 1 oder 2, **dadurch gekennzeichnet, dass** die Verweilzeit für das Behältererzeugnis in der geschlossenen Herstellform auf weniger als 7 Sekunden eingestellt ist.

5. Vorrichtung nacheinem der vorstehenden Ansprüche, **dadurch gekennzeichnet, dass** die Nachbehandlungseinrichtung (4) eine Vorrichtung (6) zum Erzeugen eines zumindest das jeweilige Behältererzeugnis beaufschlagenden Kühlluftstroms aufweist.

6. Vorrichtung nach Anspruch 4, **dadurch gekennzeichnet, dass** die Nachbehandlungseinrichtung eine Strömungsleiteinrichtung zum Erzeugen eines gerichteten Luftstroms (20, 22) aus komprimierter Kühlluft aufweist.

7. Vorrichtung nach einem der vorstehenden Ansprüche, **dadurch gekennzeichnet, dass** die Nachbearbeitungseinrichtung (4) eine Art Kühltunnel (51) mit einem Durchgang (52) für den Durchlauf das jeweilige Behältererzeugnis und mit den Durchgang (52) zumindest teilweise begrenzenden Tunnelwänden (53) aufweist, die mittels eines die Wände (53) durchströmenden Kühlmediums kühlbar sind.

8. Vorrichtung nach einem der vorstehenden Ansprüche, **dadurch gekennzeichnet, dass** die Nachbehandlungseinrichtung (4) eine Tiefkühleinrichtung, beispielsweise in Form eines Beckens mit fließendem flüssigen Stickstoff oder flüssiger Luft, aufweist.

9. Vorrichtung nach einem der vorstehenden Ansprüche, **dadurch gekennzeichnet, dass** die Nachbehandlungseinrichtung (4) eine einen Vorschub der Behältererzeugnisse bewirkende Fördereinrichtung (61) mit an den Behältererzeugnissen angreifenden Förderelementen (65, 67, 71, 73) aufweist, die mittels eines die Förderelemente (65, 67, 71, 73) durchströmenden Kühlmittelstroms kühlbar sind.

10. Vorrichtung nach einem der vorstehenden Ansprüche, **dadurch gekennzeichnet, dass** die Nachbehandlungseinrichtung (4) eine Kühlwirkung auf die Behältererzeugnisse ausübt, die über die Dauer der Nachbehandlung zumindest näherungweise die gleiche Orientierung besitzen.

11. Verfahren zum Herstellen blasgeformter und befüllter Behältererzeugnisse aus Kunststoffmaterial mittels einer Formeinrichtung (1), die Einzel-Formteile (7) aufweist, die paarweise aufeinander zu und voneinander weg bewegt werden, um eine Herstellform zu schließen bzw. zu öffnen, in der das jeweilige Behältererzeugnis geformt und mit einem Behälterinhalt versehen sowie geschlossen wird, **dadurch gekennzeichnet, dass** nach einer Austrittsstelle (2) des jeweiligen Behältererzeugnisses aus der Formeinrichtung (1) dieses einer Nachbehandlungszone zugeführt wird, in der auf das jeweilige Behältererzeugnis und/oder auf den jeweiligen Behälterinhalt eine temperaturbeeinflussende Wirkung ausgeübt wird.

12. Verfahren nach Anspruch 11, **dadurch gekennzeichnet, dass** innerhalb der Nachbehandlungszone eine konvektive Kühlung des Behältererzeugnisses von vorzugsweise mindestens 20 sec. Dauer durchgeführt wird, bei der zumindest näherungsweise die gleiche Orientierung für das Behältererzeugnis wie bei der Behälterbefüllung beibehalten wird.

13. Verfahren nach Anspruch 11 oder 12, **dadurch gekennzeichnet, dass** in der Nachbehandlungszone als Nachbehandlungseinrichtung zumindest eine Temperiereinrichtung insbesondere in Form eine Kühleinrichtung (4), vorgesehen wird.

14. Verfahren nach einem der Ansprüche 11 bis 13, **dadurch gekennzeichnet, dass** die Verweilzeit in der geschlossenen Herstellform für das Behältererzeugnis auf weniger als 7 Sekunden eingestellt wird.

## Claims

1. Device for producing at least one container product from plastics material, which is moulded by means of a moulding device (1), furnished with a pre-definable container content by means of a filling device, and closed by means of a closing device, wherein the moulding device (1) comprises individual mould sections (7), which are moved in pairs on top of one another, to and away from each other to close and/or open a production mould, in which the respective container product is moulded, furnished with the container content and closed, **characterised in that** the respective finished container product is transported to a post-treatment zone in which a temperature-influencing action is applied to the respective container product and/or the respective container content.

2. Device according to claim 1, **characterised in that** the post-treatment zone allows convective cooling of the container product for a duration of preferably at least 20 seconds, during which at least approximately the same orientation is maintained for the container product as during container filling.

3. Device according to either claim 1 or claim 2, **characterised in that** at least one tempering device, especially in the form of a cooling device, is provided in the post-treatment zone as a post-treatment device (4).

4. Device according to either claim 1 or claim 2, **characterised in that** the stay time of the container product in the closed production mould is set to be less than 7 seconds.

5. Device according to any one of the preceding claims, **characterised in that** the post-treatment device (4) comprises a device (6) for producing a cooling air flow which is at least applied to the respective container product.

6. Device according to claim 4, **characterised in that** the post-treatment device comprises a flow guide device for generating a directed air flow (20, 22) comprising compressed cooling air.

7. Device according to any one of the preceding claims, **characterised in that** the post-treatment device (4) comprises a kind of cooling tunnel (51) with a passage (52) allowing the respective container product to pass through and with tunnel walls (53) at least partially delimiting the passage (52), said tunnel walls being able to be cooled by means of a cooling medium flowing through one of the walls (53).

8. Device according to any one of the preceding claims, **characterised in that** the post-treatment device (4) comprises a freezing device, for example in the form of a basin with flowing liquid nitrogen or liquid air.

9. Device according to any one of the preceding claims, **characterised in that** the post-treatment device (4) comprises a conveying device (61) causing the container products to be advanced with conveying elements (65, 67, 71. 73) engaging with the container products, said conveying elements being able to be cooled by means of a coolant flow flowing through said conveying elements (65, 67, 71, 73).

10. Device according to any one of the preceding claims, **characterised in that** the post-treatment device (4) applies a cooling action to the container products, which have at least approximately the same orientation for the duration of the post-treatment.

11. Method for producing blow-moulded and filled container products from plastics material by means of a moulding device (1), having individual mould sections (7), which are moved in pairs on top of one another, to and away from each other to close and/or open a production mould in which the respective container product is moulded, furnished with a container content and closed, **characterised in that,** after a discharge point (2) for the respective container product from the moulding device (1), said container product is transported to a post-treatment zone in which a temperature-influencing action is applied to the respective container product and/or the respective container content.

12. Method according to claim 11, **characterised in that** convective cooling of the container product for a duration of preferably at least 20 seconds is carried out inside the post-treatment zone, during which at least approximately the same orientation is maintained for the container product as during container filling.

13. Method according to either claim 11 or claim 12, **characterised in that** at least one tempering device, especially in the form of a cooling device (4), is provided in the post-treatment zone as a post-treatment device.

14. Method according to any one of claims 11 to 13, **characterised in that** the stay time in the closed production mould for the container product is set to less than 7 seconds.

## Revendications

1. Installation de fabrication d'au moins un produit de type récipient en matière plastique, qui est moulé au moyen d'un dispositif (1) de moulage, qui est pourvu d'un contenu de récipient pouvant être donné à l'avance au moyen d'un dispositif de remplissage et qui est fermé au moyen d'un dispositif de fermeture, dans laquelle le dispositif (1) de moulage a des parties (7) de moulage individuelles, qui par paire sont rapprochées et éloignées pour fermer et ouvrir un moule de fabrication, dans lequel le produit respectif de type récipient est moulé et est pourvu du contenu du récipient ainsi que fermé, **caractérisée en ce que** le produit de type récipient fini de fabrication est envoyé à une zone de post-traitement, dans laquelle un effet influençant la température s'applique au produit de type récipient et/ou au contenu du récipient.

2. Installation de fabrication suivant la revendication 1, **caractérisée en ce que** la zone de post-traitement autorise un refroidissement par convection du produit de type récipient d'une durée, de préférence d'au moins 20 secondes, dans laquelle, au moins à peu près, la même orientation du produit de type récipient est conservée que pendant le remplissage du récipient.

3. Installation de fabrication suivant la revendication 1 ou 2, **caractérisée en ce que**, dans la zone de post-traitement, il est prévu, comme dispositif (4) de post-traitement, au moins un dispositif de mise en température, notamment sous la forme d'un dispositif de refroidissement.

4. Installation de fabrication suivant la revendication 1 ou 2, **caractérisée en ce que** le temps de séjour du produit de type récipient dans le moule de fabrication fermé est réglé à moins de 7 secondes.

5. Installation de fabrication suivant l'une des revendications précédentes, **caractérisée en ce que** le dispositif (4) de post-traitement a un système (6) de production d'un courant d'air de refroidissement s'appliquant au moins au produit de type récipient.

6. Installation de fabrication suivant la revendication 4, **caractérisée en ce que** le dispositif de post-traitement a un dispositif de conduite d'écoulement pour produire un courant (20, 22) d'air dirigé d'air comprimé de refroidissement.

7. Installation de fabrication suivant l'une des revendications précédentes, **caractérisée en ce que** le dispositif (4) de post-traitement a une sorte de tunnel (51) de refroidissement, ayant un passage (52) pour le passage du produit de type récipient et des parois (53) de tunnel, qui délimitent, au moins en partie, le passage (52) et qui peuvent être refroidies au moyen d'un fluide de refroidissement passant dans les parois (53).

8. Installation de fabrication suivant l'une des revendications précédentes, **caractérisée en ce que** le dispositif (4) de post-traitement a un dispositif de congélation à très basse température, par exemple sous la forme d'un bassin à courant d'azote liquide ou d'air liquide.

9. Installation de fabrication suivant l'une des revendications précédentes, **caractérisée en ce que** le dispositif (4) de post-traitement a un dispositif (61) de transport provoquant l'avance du produit de type récipient et ayant des éléments (67, 71, 73) de transport, qui attaquent les produits de type récipient et qui peuvent être refroidis au moyen d'un courant de fluide de refroidissement passant dans les éléments (67, 71, 73) de transport.

10. Installation de fabrication suivant l'une des revendications précédentes, **caractérisée en ce que** le dispositif (4) de post-traitement applique un effet de refroidissement aux produits de type récipient, qui, sur la durée du post-traitement, ont au moins à peu près la même orientation.

11. Procédé de fabrication de produits de type récipient en matière plastique moulés par soufflage et remplis au moyen d'un dispositif (1) de moulage, qui a des parties (7) de moulage individuelles, qui par paire sont rapprochées et éloignées pour fermer et ouvrir un moule de fabrication, dans lequel le produit respectif de type récipient est moulé et est pourvu du contenu du récipient ainsi que fermé, et qui est pourvu d'un contenu de récipient, **caractérisé en ce que**, après un point (2) de sortie du produit de type récipient du dispositif (1) de moulage, on l'envoie à une zone de post-traitement, dans laquelle on applique un essai influençant la température au produit de type récipient et/ou au contenu du récipient.

12. Procédé suivant la revendication 11, **caractérisé en ce que** l'on effectue, dans la zone de post-traitement, un refroidissement par convection du produit de type récipient d'une durée, de préférence d'au moins 20 secondes, pendant laquelle on conserve, au moins à peu près, la même orientation du produit de type récipient que pendant le remplissage du récipient.

13. Procédé suivant la revendication 11 ou 12, **caractérisé en ce que** l'on prévoit, dans la zone du post-traitement, comme dispositif de post-traitement, au moins un dispositif de mise en température, notamment sous la forme d'un dispositif (4) de refroidissement.

14. Procédé suivant l'une des revendications 11 à 13, **caractérisé en ce que** l'on règle la durée de séjour du produit de type récipient dans le moule de fabrication fermé à moins de 7 secondes.
